(19) Europäisches Patentamt / European Patent Office / Office européen des brevets

(11) **EP 3 025 958 B1**

(12) **FASCICULE DE BREVET EUROPEEN**

(45) Date de publication et mention
de la délivrance du brevet:
**04.01.2017 Bulletin 2017/01**

(51) Int Cl.:
***B64C 27/00*** *(2006.01)* ***G01B 11/26*** *(2006.01)*

(21) Numéro de dépôt: **15193203.5**

(22) Date de dépôt: **05.11.2015**

(54) **DISPOSITIF DE MESURE DES POSITIONS ANGULAIRES D'UN ELEMENT DE PALE DE GIRAVION PAR RAPPORT A UN MOYEU DE ROTOR, GIRAVION ASSOCIE ET PROCEDE DE MESURE CORRESPONDANT**

VORRICHTUNG ZUM MESSEN DER WINKELPOSITIONEN EINES BLATTELEMENTS EINES DREHFLÜGELFLUGZEUGS IN BEZUG AUF DIE ROTORNABE, ENTSPRECHENDES DREHFLÜGELFLUGZEUG UND ENTSPRECHENDES MESSVERFAHREN

A DEVICE FOR MEASURING THE ANGULAR POSITIONS OF A ROTORCRAFT BLADE ELEMENT RELATIVE TO A ROTOR HUB, AN ASSOCIATED ROTORCRAFT, AND A CORRESPONDING MEASUREMENT METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.11.2014 FR 1402694**

(43) Date de publication de la demande:
**01.06.2016 Bulletin 2016/22**

(73) Titulaire: **Airbus Helicopters**
**13725 Marignane Cedex (FR)**

(72) Inventeur: **HOCQUETTE, Julien**
**13090 AIX EN PROVENCE (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**GB-A- 1 116 748       US-A- 4 604 526**
**US-A1- 2014 226 153**

• **FRITZ BODEN, KAI BODENSICK, BOLESLAW STASICKI: "Application of Image Pattern Correlation for non-intrusive deformation measurement of fast rotating objects on aircrafts", PROC. OF SPIE, vol. 7522, 2010, XP040515416,**

EP 3 025 958 B1

# Description

La présente invention concerne un dispositif de mesure pour déterminer les positions angulaires selon au moins un axe de rotation d'un élément de pale de giravion par rapport à un moyeu d'un rotor principal de sustentation et de propulsion ou d'un rotor anticouple.

En effet, lors de la rotation du moyeu d'un rotor de giravion tel que par exemple un hélicoptère, un élément de pale est généralement apte à pivoter, dans un repère orthogonal tournant lié au moyeu, autour de trois axes de rotation.

Un premier axe de rotation est appelé axe de pas et permet de modifier l'incidence aérodynamique des pales, par suite les forces aérodynamiques sur les pales et est à l'origine de la portance et de la traction exercés par le rotor sur le giravion. Un tel axe de pas s'étend donc sensiblement parallèlement à une direction longitudinale correspondant à l'envergure de l'élément de pale.

Un deuxième axe de rotation est appelé axe de battement et permet, à une extrémité libre de l'élément de pale, de se déplacer sensiblement perpendiculairement par rapport au plan de rotation du rotor. Un tel axe de battement est donc sensiblement inscrit dans le plan de rotation des pales du rotor.

Un troisième axe de rotation est quant à lui appelé axe de trainé et est agencé sensiblement perpendiculairement par rapport aux premier et second axes de rotation de l'élément de pale.

L'invention vise donc plus particulièrement un dispositif de mesure permettant de relever et d'enregistrer automatiquement les données relatives à ces positions angulaires qui sont variables pendant la rotation du rotor, y compris pendant chaque tour.

En effet, l'évaluation des mouvements de rotation d'un élément de pale de rotor pendant une période limitée dans le temps prédéterminée ou pendant toute la durée de vie du giravion est particulièrement intéressante. Une telle mesure de ces mouvements de rotation, en conditions normales de vol, permet en effet de comprendre et d'évaluer très précisément les sollicitations dynamiques auxquelles est soumis le rotor d'un giravion.

De façon générale, pour mesurer les positions angulaires d'un élément de pale, il est connu d'utiliser des dispositifs de mesure des positions d'un élément de pale de giravion compotant des cibles ou des motifs de points aléatoirement agencés. Ces cibles ou motifs sont alors rapporté sur l'élément de pale pour identifier l'angle de battement des éléments de pale à chacune des rotations d'un rotor. Des tels dispositifs de mesure ont notamment été décrits dans les documents US 4 604 526 et GB 1 116 748 ou encore dans une publication technique nommée « Application of image patern correlation for non-intrusive deformation mesurements of fast rotting objects on aircrafts », portant la référence XP040515416 dans la base données des ouvrages non-brevets de l'Office Européen des Brevets et écrite par Fritz Boden, Kai Bodensiek et Boleslaw Stasicki.

En effet, si une telle publication technique divulgue l'utilisation d'une caméra pour prendre des photos d'un motif placé sur un élément de pale, ce motif de points aléatoirement agencés ne permet pas une mesure rapide et simple des différentes positions angulaire de l'élément de pale considéré.

Par ailleurs, la caméra est agencée sur une partie fixe du fuselage du giravion et non dans référentiel tournant tel que le moyeu d'un rotor. Au surplus, un tel dispositif de mesure require également une lampe stroboscopique pour faciliter la prise et l'analyse ultérieure des photos du motif.

Ainsi, un tel dispositif de mesure est très complexe à mettre en oeuvre de manière identifier les positions angulaires de l'élément de pale et il ne permet pas de mesurer ces positions angulaires sur une révolution complète du rotor.

En outre, il a également été utilisé des capteurs optiques tels que décrits dans les documents JP 2010149602 ou US 2014/226153. Ces documents proposent en effet des dispositifs de mesure dans lesquels une source de lumière est placée sur la pale et un détecteur est placé sur le moyeu. Une telle solution permet donc uniquement de mesurer l'angle battement de l'élément de pale.

Un tel dispositif impose alors d'équiper l'élément de pale avec une source de lumière qu'il faut loger et solidariser avec l'élément de pale. Une telle intégration de la source de lumière oblige alors à modifier la conception structurelle de l'élément de pale.

En outre, il est également nécessaire d'acheminer de l'énergie électrique jusqu'à cette source pour qu'elle puisse émettre de la lumière. Or, un tel acheminement d'électricité est particulièrement complexe à réaliser au niveau d'un rotor de giravion, c'est-à-dire en axes tournants. De plus, les mouvements relatifs entre les différentes pièces du rotor peuvent produire une usure des contacts électriques et rendre une telle solution peu fiable dans le temps.

Au surplus, une telle source de lumière, aussi faible soit-elle, engendre une masse tournante supplémentaire et nécessite alors de procéder à un rééquilibrage du rotor.

La présente invention a alors pour objet de proposer un dispositif de mesure, un giravion et un procédé permettant de s'affranchir des limitations mentionnées ci-dessus. Le dispositif de mesure peut ainsi permettre de conserver une conception structurelle existante des éléments de pale du rotor et de fournir une solution simple, sûre, efficace et fiable dans le temps, de manière à mesurer les positions angulaires d'un élément de pale par rapport à un repère orthogonal lié au moyeu dudit rotor.

L'invention concerne donc un dispositif de mesure des positions angulaires d'un élément de pale de giravion, l'élément de pale étant agencé mobile en rotation par rapport à un moyeu de rotor autour d'au moins un axe de rotation. En d'autres termes, l'élément de pale possède au moins un degré de liberté en rotation par rapport au moyeu du rotor.

Selon l'invention, le dispositif se caractérise en ce qu'il comporte :

- au moins un motif à damiers apte à être solidarisé avec l'élément de pale, le motif à damiers comportant deux groupes de surfaces présentant respectivement des facteurs de luminance différents, chaque surface d'un premier groupe présentant un premier facteur de luminance et étant juxtaposée avec au moins une surface d'un second groupe présentant un second facteur de luminance, le premier facteur de luminance étant supérieur au second facteur de luminance,
- au moins une caméra apte à prendre une pluralité d'images du motif à damiers en fonction du temps, la caméra étant apte à être solidarisée avec le moyeu,
- un organe de synchronisation qui permet d'affecter à chaque image prise par la caméra un paramètre temporel fonction de l'angle d'azimut du rotor,
- une mémoire permettant d'enregistrer chaque image avec le paramètre temporel correspondant,
- un calculateur permettant de déterminer automatiquement les positions angulaires de l'élément de pale selon au moins un axe de rotation à partir des images du motif à damiers.

Autrement dit, le dispositif conforme à l'invention permet de déterminer les différentes positions d'un élément de pale au moyen d'un motif à damiers rapporté sur une partie rigide d'une pale et quasi indéformable sous des sollicitations normales du rotor. Ainsi, une telle partie rigide peut être avantageusement formée par un pied de l'élément de pale et le motif à damiers être quant à lui formé par un film imprimé par exemple en matière plastique ou cellulosique.

Par ailleurs pour solidariser le motif à damiers avec l'élément de pale, différentes solutions sont envisagées et notamment des solidarisations utilisant un intermédiaire de collage, une force électrostatique et/ou magnétique, des bandes auto-agrippantes munies de boucles et de crochets ou des moyens d'encliquetage.

Dans ces conditions, le premier facteur de luminance du premier groupe de surfaces du motif à damiers est avantageusement choisi proche du chiffre 1 car les surfaces du premier groupe sont préférentiellement choisies de couleur blanche. Au contraire, le second facteur de luminance du second groupe de surfaces du motif à damiers est avantageusement choisi proche du chiffre 0 car les surfaces du second groupe sont préférentiellement choisies de couleur noire. Un fort contraste entre les surfaces des premier et second groupes permet ainsi de garantir un traitement aisé des images issues de la caméra et ainsi une précision maximale dans la détermination de des positions angulaires de l'élément de pale.

La caméra est donc agencée sur le moyeu du rotor et orientée pour permettre de "d'observer" constamment le motif à damiers dans son champ de vision. Une telle caméra est donc solidarisée par encastrement avec le moyeu par des moyens de solidarisation tels des boulons, sangles, rivets et analogues.

En outre, l'organe de synchronisation permet, en fonction de l'instant auquel est prise l'image, de déterminer une position en azimut de l'image, et par conséquent de réaliser la courbe des positions angulaires de l'élément de pale en fonction des positions en azimut du rotor.

Le calculateur détermine les positions relatives du motif à damiers dans l'espace pour toutes les images issues de la caméra. Pour ce faire, un opérateur peut notamment définir manuellement une position absolue du motif à damiers dans une image correspondant à une position prédéterminée de l'élément de pale considéré. En pratique, une telle position prédéterminée est obtenue en positionnant par exemple le motif à damiers de telle manière qu'une succession de surfaces juxtaposées le constituant soit alignée avec une ligne formant l'horizon lorsque le rotor est à l'arrêt.

Une autre technique peut consister à utiliser un rapporteur d'angle précis pour mesurer manuellement la position du motif à damiers par rapport à un référentiel connu, tel que par exemple un référentiel dans un hangar.

Avantageusement, le calculateur peut déterminer les positions angulaires de l'élément de pale selon trois axes de rotation formant un repère orthogonal lié au moyeu, le repère orthogonal comprenant un premier axe, dit axe de pas, un second axe, dit axe de battement et un troisième axe, dit axe de trainée.

En d'autres termes, le dispositif de mesure permet d'identifier les positions angulaires de l'élément de pale autour des trois axes de rotation précédemment décrits de l'élément de pale par rapport au moyeu du rotor. Le dispositif de mesure permet ainsi de mesurer à la fois l'angle de pas $\theta$, l'angle de battement $\beta$ et l'angle de trainée $\delta$ d'un élément de pale en fonction de l'angle d'azimut $\Psi$ du rotor.

L'organe de synchronisation peut quant à lui se présenter sous diverses formes.

Selon un premier mode de réalisation, l'organe de synchronisation peut comporter un capteur permettant de détecter chaque tour du rotor.

Dans ce cas, la référence en azimut est donnée par le "top" d'un capteur de position du rotor fourni après chaque rotation de 360 degrés de celui-ci. Les images issues de la caméra sont alors enregistrées dans la mémoire simultanément au signal issu de ce capteur. Un tel capteur peut notamment être de type magnétique ou optique pour identifier chaque nouveau tour de rotor.

Ainsi, en connaissant d'une part, la fréquence d'acquisition Fs de la caméra et, d'autre part, la vitesse angulaire $\omega$ de rotation du rotor, on peut calculer l'angle d'azimut $\Psi i$ de chaque image selon la formule :

$$\Psi i = \frac{i * \omega}{Fs}$$

Selon un second mode de réalisation, l'organe de synchronisation peut utiliser un élément fixe par rapport au fuselage du giravion et présent sur les images issues de la caméra tel que par exemple une poutre de queue du giravion. En effet, une telle poutre de queue apparait une seule fois dans le champ de vision de la caméra à chacune de ses révolutions. Elle correspond alors à un angle d'azimut $\Psi 0 = 0°$.

De même le calculateur et la mémoire peuvent se présenter sous diverses formes et être des organes solidaires du giravion ou des organes amovibles.

Ainsi, selon une première configuration de l'invention, le calculateur peut être agencé sur le giravion.

Dans ce cas, la mémoire est également avantageusement agencée sur le giravion et les données qu'elle contient sont directement exploitées par le calculateur pour déterminer les positions angulaires de l'élément de pale en fonction de l'angle d'azimut du rotor.

Par ailleurs, et selon une première variante de la première configuration, le calculateur peut être apte à être solidarisé avec le moyeu du rotor à proximité de la caméra.

Autrement dit, le calculateur tourne avec le rotor par rapport au fuselage du giravion.

Selon une seconde variante de la première configuration, le calculateur peut être apte à être agencé sur une partie fixe par rapport à un fuselage du giravion.

Dans ce cas, le calculateur est agencé de manière immobile par rapport au fuselage du giravion

Enfin selon une seconde configuration de l'invention, le calculateur peut être déporté du giravion.

Ainsi, l'exploitation des images permettant la mesure des positions angulaires de l'élément de pale de giravion est réalisée sur un organe annexe, tel un ordinateur non embarqué sur le giravion.

Avantageusement dans ce cas, la mémoire peut être de type amovible et coopérer avec une interface solidaire de la caméra.

En effet, une fois les images réalisées, elles sont stockées dans la mémoire en étant synchronisées avec le paramètre temporel. La mémoire peut alors être amovible et se présenter sous la forme d'une carte mémoire par exemple qui est extraite d'une interface de lecture/écriture agencée directement au niveau de la caméra.

Cette carte est alors introduite dans une autre interface connectée à un calculateur externe au giravion. Les données issues des images de la caméra sont donc dans ce cas exploitées par un calculateur indépendant du giravion.

Par ailleurs, le motif à damiers peut comporter en pratique:

- au moins trois lignes formées par une alternance de surfaces présentant des facteurs de luminance différents, les lignes étant parallèles entre elles et agencées sur l'élément de pale selon une direction parallèle à un axe de pas de l'élément de pale, et,
- au moins trois colonnes formées par une alternance de surfaces présentant des facteurs de luminance différents, les colonnes étant parallèles entre elles et agencées sur l'élément de pale selon une direction parallèle à un axe de battement de l'élément de pale.

Autrement dit, le motif à damiers est agencé sur l'élément de pale de façon à ce que les lignes du motif soient parallèles à une direction correspondant à l'envergure et à ce que les colonnes soient perpendiculaires à cette même direction.

Selon un mode de réalisation particulier, le motif à damiers peut comporter cinq lignes formées par une alternance de surfaces présentant des facteurs de luminance différents et neuf colonnes formées par une alternance de surfaces présentant des facteurs de luminance différents.

Un tel motif à damiers permet en effet de garantir une exploitation optimale des images prises par la caméra pour déterminer les positions angulaires de l'élément de pale sur un tour de rotor.

Avantageusement, le motif à damiers peut comporter un entourage dont le facteur de luminance est sensiblement égal au premier facteur de luminance du premier groupe de surfaces.

En d'autres termes, l'entourage des lignes et des colonnes est sensiblement de couleur blanche et permet de bien identifier chaque ligne et colonne du motif.

En pratique, les surfaces du premier groupe et du second groupe peuvent être de forme carré.

De cette manière, toutes les surfaces des premier et second groupes présentent les mêmes dimensions en longueur et en largeur. Un tel agencement permet alors de simplifier un algorithme de reconnaissance des coins internes au motif définis par leur position (px, py) en pixel dans l'image. Pour ce faire, il suffit d'indiquer le nombre de surfaces selon les directions X et Y d'un repère orthogonal direct associé au motif à damiers.

Selon un mode de réalisation particulier, le motif à damiers peut comporter des surfaces du second groupe agencées au niveau de chacun des coins de la forme définie par les deux groupes de surfaces.

Ainsi, les surfaces du premier groupe et les surfaces du second groupe sont positionnées de manière à former un rectangle ou un carré présentant une surface du second groupe au niveau de chacun de ses coins. Un tel agencement, combiné avec un entourage dont le facteur de luminance est sensiblement égal au premier facteur de luminance, permet ainsi de garantir une reconnaissance optimale des coins de la forme définie par l'ensemble des surfaces du premier et du second groupe.

Le traitement des images issues de la caméra permet alors de reconnaître les positions des coins du motif à damiers et des coins de chaque surface le constituant et ainsi de déterminer la transformation mathématique permettant de déterminer les positions angulaires de l'élément de pale correspondant.

L'invention concerne également un giravion remarquable en ce qu'il comporte un dispositif de mesure des positions angulaire d'un élément de pale par rapport à un moyeu de rotor tel que décrit précédemment.

Autrement dit, l'invention ne se limite pas à un dispositif de mesure des positions angulaires d'un élément de pale de giravion. Elle concerne également un giravion comportant :

- au moins un motif à damiers solidarisé avec l'élément de pale, le motif à damiers comportant deux groupes de surfaces présentant respectivement des facteurs de luminance différents, chaque surface d'un premier groupe présentant un premier facteur de luminance et étant juxtaposée avec au moins une surface d'un second groupe présentant un second facteur de luminance, le premier facteur de luminance étant supérieur au second facteur de luminance ;
- au moins une caméra apte à prendre une pluralité d'images du motif à damiers en fonction du temps, la caméra étant solidarisée avec le moyeu ;
- un organe de synchronisation qui permet d'affecter à chaque image prise par la caméra un paramètre temporel fonction de l'angle d'azimut dudit rotor ;
- une mémoire permettant d'enregistrer chaque image avec le paramètre temporel correspondant ;
- un calculateur permettant de déterminer automatiquement les positions angulaires de l'élément de pale selon au moins un axe de rotation à partir des images du motif à damiers et de leur paramètre temporel correspondant.

Un tel giravion permet ainsi de réaliser une pluralité d'images d'un motif à damiers solidarisé avec l'élément de pale. Il permet ensuite de traiter ces images de façon à reconnaitre les positions des coins du motif et des coins de chaque surface le constituant.

La présente invention a aussi pour objet le procédé de mesure des positions angulaires selon au moins un axe de rotation d'un élément de pale de giravion par rapport à un moyeu de rotor. Selon l'invention, un tel procédé se caractérise en ce qu'il comporte des étapes consistant à :

- solidariser au moins un motif à damiers avec l'élément de pale, le motif à damiers comportant deux groupes de surfaces présentant respectivement des facteurs de luminance différents, chaque surface d'un premier groupe présentant un premier facteur de luminance et étant juxtaposée avec au moins une surface d'un second groupe présentant un second facteur de luminance, le premier facteur de luminance étant supérieur au second facteur de luminance ;
- solidariser avec le moyeu au moins une caméra apte à prendre une pluralité d'images du motif à damiers en fonction du temps ;
- réaliser une pluralité d'images du motif à damiers lors d'une rotation dudit rotor ;
- synchroniser chaque image effectuée par la caméra avec un paramètre temporel fonction de l'angle d'azimut dudit rotor ;
- enregistrer chaque image avec le paramètre temporel correspondant ;
- déterminer automatiquement les positions angulaires de l'élément de pale selon au moins un axe de rotation à partir des images du motif à damiers et de leur paramètre temporel correspondant.

En d'autres termes, l'invention concerne également un procédé permettant de mesurer les positions angulaires d'un élément de pale par rapport à un moyeu de rotor. Selon ce procédé, on réalise une pluralité d'images d'un motif à damiers solidarisé avec l'élément de pale puis on traite ces images de façon à reconnaitre les positions des coins du motif et des coins de chaque surface le constituant.

Selon un mode de réalisation particulier, le procédé de mesure peut comporter une étape visant à déterminer les positions angulaires de l'élément de pale selon trois axes de rotation formant un repère orthogonal lié au moyeu, le repère orthogonal comprenant un premier axe, dit axe de pas, un second axe, dit axe de battement et un troisième axe, dit axe de trainée.

De cette manière, le procédé permet de mesurer en fonction du temps les positions dans l'espace d'un élément de pale par rapport à un moyeu de rotor. Le procédé de mesure permet ainsi d'identifier les positions angulaires selon trois degrés de liberté en rotation de l'élément de pale par rapport au moyeu.

Avantageusement, le procédé de mesure peut permettre de réaliser entre 5 et 45 images du motif à damiers sur un tour de rotor.

Ainsi, un tel procédé peut utiliser une caméra dont la fréquence d'acquisition est comprise entre 25 images/seconde et 200 images/seconde. En fonction de la vitesse de rotation du rotor, une telle caméra permet par exemple de réaliser des images du motif à damiers tous les 50 degrés par tour au minimum et tous les 5 degrés par tour au maximum.

L'invention et ses avantages apparaîtront avec plus de détails dans le cadre de la description qui suit avec des exemples donnés à titre illustratif en référence aux figures annexées qui représentent :

- la figure 1, une vue de dessus d'un giravion équipé d'un dispositif de mesure conforme à l'invention,

- la figure 2, un schéma fonctionnel d'un dispositif de mesure conforme à l'invention,

- la figure 3, une vue en perspective partielle d'un rotor de giravion selon une première variante de la première configuration, conformément à l'invention,

- la figure 4, une vue de dessus d'un élément de pale de rotor de giravion équipé d'un motif à damiers, conformément à l'invention,

- la figure 5, une vue de coté d'un giravion équipé d'un dispositif de mesure selon une deuxième variante de la première configuration, conformément à l'invention,

- les figures 6 à 9, différentes images d'un motif à damiers obtenues avec la caméra du dispositif de mesure, conformément à l'invention.

Les éléments présents dans plusieurs figures distinctes sont affectés d'une seule et même référence.

Comme déjà évoqué précédemment, l'invention se rapporte au domaine des giravions et, plus particulièrement, au domaine des dispositifs de mesure des positions angulaires des éléments de pale d'un rotor de giravion.

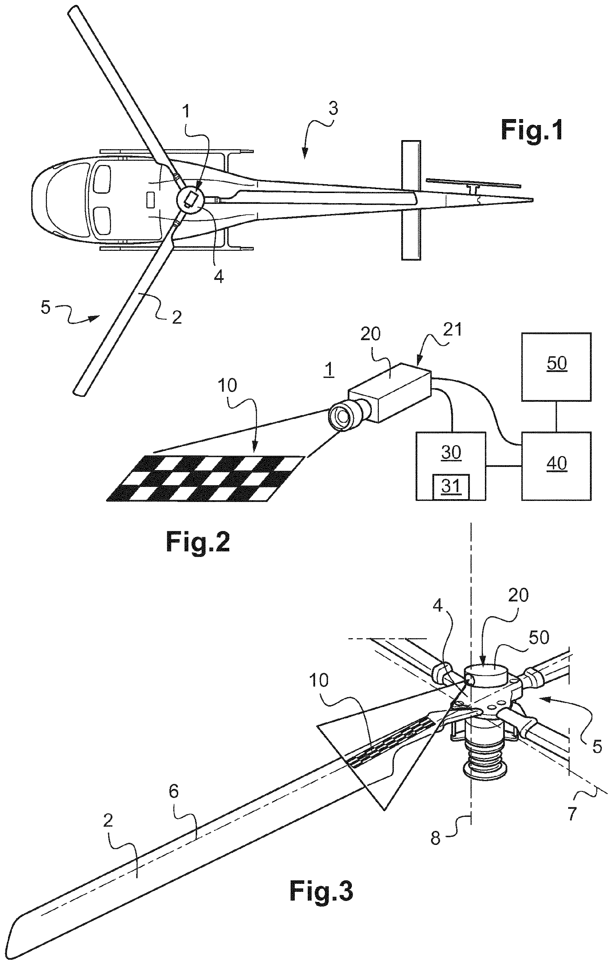

Ainsi, et tel que représenté à la figure 1, le dispositif de mesure 1 permet de déterminer les positions angulaires de l'élément de pale 2 d'un rotor 5 autour d'au moins un axe de rotation par rapport au moyeu 4 d'entrainement en rotation de l'élément de pale 2.

Par ailleurs, tel que représenté aux figures 2 et 3, le dispositif 1 équipant le giravion 3 comporte un motif à damiers 10, une caméra 20, un organe de synchronisation 30, une mémoire 40 et un calculateur 50. Le dispositif de mesure 1 permet ainsi de mesurer les positions angulaires de l'élément de pale 2 selon au moins un des trois axes de rotation 6, 7 et 8 formant un repère orthogonal. Un tel repère orthogonal comprend un premier axe 6, dit axe de pas, un second axe 7, dit axe de battement et un troisième axe 8, dit axe de trainée.

Un tel motif à damiers 10 est donc apte à être solidarisé avec une partie rigide d'un élément de pale 2. La caméra 20 est quant à elle solidarisée avec le moyeu 4 du rotor 5 et permet de prendre une pluralité d'images du motif à damiers 10 pendant chaque tour de rotor 5.

L'organe de synchronisation 30, qui peut par exemple comporter un capteur 31, permet quant à lui d'affecter à chaque image issue de la caméra 20 un paramètre temporel fonction de l'angle d'azimut dudit rotor 5. Les images issues de la caméra 20 sont alors stockées dans une mémoire 40 via une interface 21 qui peut notamment se présenter sous la forme d'un lecteur de carte ou d'un port de communication lorsque la mémoire 40 est de type amovible, telle une carte mémoire ou une clé usb par exemple.

Enfin un calculateur 50 permet de déterminer la mesure des positions angulaires de l'élément de pale 2 à partir des images du motif à damiers 10 solidarisé avec celui-ci.

Tel que représenté à la figure 3, selon une première variante d'une première configuration de l'invention, le calculateur 50 peut être solidaire de la caméra 20, et par conséquent être agencé au niveau du moyeu 4 du rotor 5.

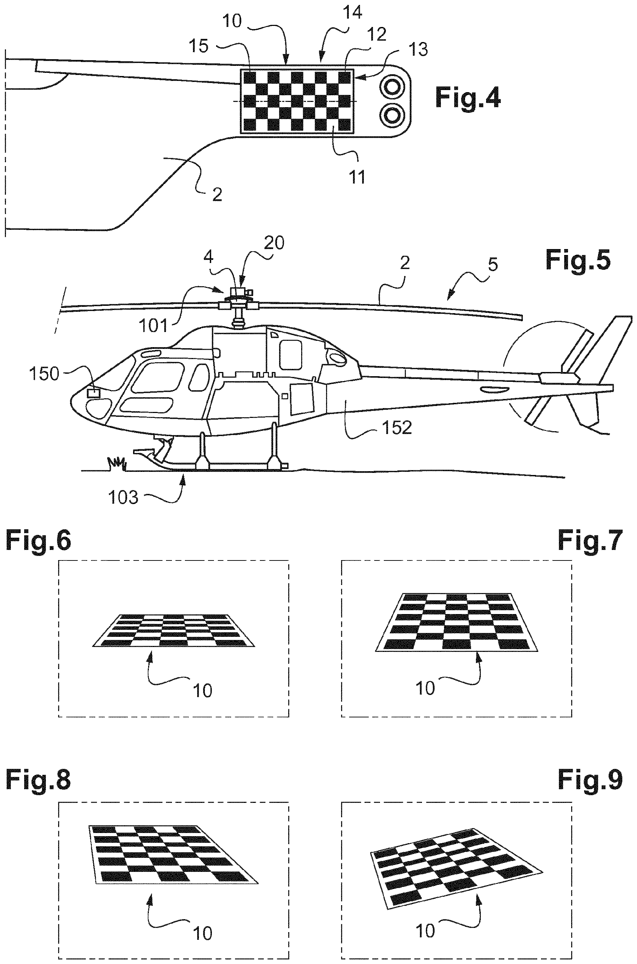

Tel que représenté aux figures 3 et 4, le motif à damiers 10 comporte deux groupes de surfaces 11 et 12 présentant respectivement des facteurs de luminance différents. Les surfaces 11 forment ainsi un premier groupe présentant un premier facteur de luminance et sont juxtaposées avec des surfaces 12 d'un second groupe présentant un second facteur de luminance. Par ailleurs, afin de les différentier, le premier facteur de luminance est choisi supérieur au second facteur de luminance.

De plus, le motif à damiers 10 comporte cinq lignes 13 formées par une alternance de surfaces 11 et 12 et neuf colonnes 14 également formées par une alternance de surfaces 11 et 12. Les lignes 13 sont agencées parallèles entre elles et positionnées sur l'élément de pale 2 selon une direction parallèle à l'axe de pas 6 de l'élément de pale 2. De façon analogue, les colonnes 14 sont agencées parallèles entre elles et positionnées sur le pied de l'élément de pale 2 selon une direction parallèle à un axe de battement 7 de cet élément de pale 2.

Par ailleurs, le motif à damiers 10 comporte également un entourage 15 agencé à la périphérie de la zone quadrillée formée par les lignes 13 et les colonnes 14 des surfaces 11 et 12 juxtaposées et de facteur de luminance différent. Un tel entourage 15 est alors avantageusement choisi avec un facteur de luminance sensiblement égal au facteur de luminance des surfaces 11 du premier groupe lorsque des surfaces 12 du second groupe sont agencées au niveau des quatre coins de la zone quadrillée formée par les lignes 13 et les colonnes 14.

Tel que représenté à la figure 5, et selon une deuxième variante d'une première configuration de l'invention, le dispositif de mesure 101 peut comporter un calculateur 150 solidaire d'une partie fixe du fuselage 152 du giravion 103. Dans ce cas, seule la caméra 20 est solidarisée avec le moyeu 4 du rotor 5.

Bien entendu, le calculateur peut également être formé par un organe annexe indépendant du giravion tel un ordinateur.

Par ailleurs, telles que représentées aux figures 6 à 9, les images issues de la caméra 20 sont des représentations en deux dimensions du motif à damiers 10 dont la forme peut varier en fonction de la position angulaire de l'élément de pale.

Ainsi, telle que représentée à la figure 6, l'image issue de la caméra correspond à une position neutre de l'élément de pale lorsque les angles de pas, de battement et de trainée sont sensiblement nuls selon une convention préétablie.

En revanche, telle que représentée à la figure 7, l'image issue de la caméra correspond dans ce cas à une première position de l'élément de pale lorsque les angles de pas et de trainée sont sensiblement nuls et que l'angle de battement n'est pas nul, selon ladite convention.

De même, telle que représentée à la figure 8, l'image issue de la caméra correspond dans ce cas à une seconde position de l'élément de pale lorsque l'angle de pas est nul et les angles de battement et de trainée sont non nuls, selon toujours ladite convention.

Enfin, telle que représentée à la figure 9, l'image issue de la caméra correspond ici à une position de l'élément de pale lorsque les angles de pas, de battement et de trainée sont non nuls.

Un algorithme de reconnaissance des formes et de positionnement des pixels formant le motif à damiers permet alors déterminer la transformation mathématique en trois dimensions correspondante à chaque image et ainsi les positions angulaires de l'élément de pale par rapport au moyeu du rotor.

Un tel algorithme est notamment connu et consiste à effectuer une identification et une extraction de points singuliers d'une image tels des angles ou des coins. Une telle méthode est généralement désignée dans la littérature par l'expression de méthode d'extraction de coins ou encore méthode de Harris-Stephens. En effet, cette méthode a notamment été décrite dans un article conjoint de messieurs Chris Harris et Mike Stephens :"A combined corner and edge detector" qui est extrait d'un rapport de conférence qui s'est tenue à l'université de Manchester du 31 aout au 2 septembre 1988 "Proceedings of the fourth Alvey Vision Conference" et que l'on peut consulter notamment à l'adresse internet suivante : http://www.bmva.org/bmvc/1988/avc-88-023.pdf.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention, qui est definie par les revendications.

**Revendications**

1. Dispositif de mesure (1, 101) des positions angulaires d'un élément de pale (2) de giravion (3, 103), ledit élément de pale (2) étant agencé mobile en rotation par rapport à un moyeu (4) de rotor (5) autour d'au moins un axe de rotation (6, 7, 8), **caractérisé en ce que** ledit dispositif de mesure (1, 101) comporte :

 - au moins un motif à damiers (10) apte à être solidarisé avec ledit élément de pale (2), ledit motif à damiers (10) comportant deux groupes de surfaces (11, 12) présentant respectivement des facteurs de luminance différents, chaque surface (11) d'un premier groupe présentant un premier facteur de luminance et étant juxtaposée avec au moins une surface (12) d'un second groupe présentant un second facteur de luminance, ledit premier facteur de luminance étant supérieur audit second facteur de luminance ;
 - au moins une caméra (20) apte à prendre une pluralité d'images dudit motif à damiers (10) en fonction du temps, ladite caméra (20) étant apte à être solidarisée avec ledit moyeu (4) ;
 - un organe de synchronisation (30) qui permet d'affecter à chaque image prise par ladite caméra (20) un paramètre temporel fonction de l'angle d'azimut dudit rotor (5) ;
 - une mémoire (40) permettant d'enregistrer chaque image avec ledit paramètre temporel correspondant ;
 - un calculateur (50, 150) permettant de déterminer automatiquement lesdites positions angulaires de l'élément de pale (2) selon au moins un axe de rotation (6, 7, 8) à partir desdites images du motif à damiers (10) et de leur paramètre temporel correspondant.

2. Dispositif selon la revendication 1, **caractérisé en ce que** ledit calculateur (50, 150) détermine les positions angulaires de l'élément de pale (2) selon trois axes de rotation (6, 7, 8) formant un repère orthogonal lié au moyeu (4), ledit repère orthogonal comprenant un premier axe (6), dit axe de pas, un second axe (7), dit axe de battement et un troisième axe (8), dit axe de trainée.

3. Dispositif selon l'une quelconque des revendications 1 à 2, **caractérisé en ce que** ledit organe de synchronisation (30) comporte un capteur (31) permettant de détecter chaque tour dudit rotor (5).

4. Dispositif selon l'une quelconque des revendications 1 à 3, **caractérisé en ce que** ledit calculateur (50, 150) est agencé sur ledit giravion (3, 103).

5. Dispositif selon la revendication 4, **caractérisé en ce que** ledit calculateur (50) est apte à être solidarisé avec le moyeu (4) du rotor (5) à proximité de ladite caméra (20).

6. Dispositif selon la revendication 4, **caractérisé en ce que** ledit calculateur (150) est apte à être agencé sur une partie fixe par rapport à un fuselage (152) dudit giravion (103).

7. Dispositif selon l'une quelconque des revendications 1 à 6, **caractérisé en ce que** ladite mémoire (40) est de type amovible et coopère avec une interface (21) solidaire de la caméra (20).

**8.** Dispositif selon l'une quelconque des revendications 1 à 7, **caractérisé en ce que** ledit motif à damiers (10) comporte:

• au moins trois lignes (13) formées par une alternance de surfaces (11, 12) présentant des facteurs de luminance différents, lesdites lignes (13) étant parallèles entre elles et agencées sur ledit élément de pale (2) selon une direction parallèle à un axe de pas (6) dudit élément de pale (2), et,

• au moins trois colonnes (14) formées par une alternance de surfaces (11, 12) présentant des facteurs de luminance différents, lesdites colonnes (14) étant parallèles entre elles et agencées sur ledit élément de pale (2) selon une direction parallèle à un axe de battement (7) dudit l'élément de pale (2).

**9.** Dispositif selon la revendication 8, **caractérisé en ce que** ledit motif à damiers (10) comporte cinq lignes (13) formées par une alternance de surfaces (11, 12) présentant des facteurs de luminance différents et neuf colonnes (14) formées par une alternance de surfaces (11, 12) présentant des facteurs de luminance différents.

**10.** Dispositif selon l'une quelconque des revendications 1 à 9, **caractérisé en ce que** ledit motif à damiers (10) comporte un entourage (15) dont le facteur de luminance est sensiblement égal au premier facteur de luminance dudit premier groupe de surfaces (11).

**11.** Dispositif selon l'une quelconque des revendications 1 à 10, **caractérisé en ce que** lesdites surfaces (11) du premier groupe et lesdites surfaces (12) du second groupe sont de forme carré.

**12.** Dispositif selon l'une quelconque des revendications 1 à 11, **caractérisé en ce que** ledit motif à damiers (10) comporte des surfaces (12) du second groupe au niveau de chacun des coins de la forme définie par les deux groupes de surfaces (11, 12).

**13.** Giravion (3, 103) **caractérisé en ce qu'**il comporte un dispositif de mesure (1, 101) des positions angulaire d'un élément de pale (2) par rapport à un moyeu (4) de rotor (5) selon l'une quelconque des revendications 1 à 12.

**14.** Procédé de mesure des positions angulaires selon au moins un axe de rotation (6, 7, 8) d'un élément de pale (2) de giravion (3, 103) par rapport à un moyeu (4) de rotor (5),

**caractérisé en ce que** ledit procédé comporte des étapes consistant à :

- solidariser au moins un motif à damiers (10) avec ledit élément de pale (2), ledit motif à damiers (10) comportant deux groupes de surfaces (11, 12) présentant respectivement des facteurs de luminance différents, chaque surface (11) d'un premier groupe présentant un premier facteur de luminance et étant juxtaposée avec au moins une surface (12) d'un second groupe présentant un second facteur de luminance, ledit premier facteur de luminance étant supérieur audit second facteur de luminance,

- solidariser avec ledit moyeu (4) au moins une caméra (20) apte à prendre une pluralité d'images dudit motif à damiers (10) en fonction du temps,

- réaliser une pluralité d'images dudit motif à damiers (10) lors d'une rotation dudit rotor (5),

- synchroniser chaque image effectuée par la caméra (20) avec un paramètre temporel fonction d'un angle d'azimut dudit rotor (5),

- enregistrer chaque image avec ledit paramètre temporel correspondant,

- déterminer automatiquement lesdites positions angulaires de l'élément de pale (2) selon au moins un axe de rotation (6, 7, 8) à partir desdites images du motif à damiers (10) et de leur paramètre temporel correspondant.

**15.** Procédé selon la revendication 14, **caractérisé en ce que** ledit procédé de mesure comporte une étape visant à déterminer les positions angulaires dudit élément de pale (2) selon trois axes de rotation (6, 7, 8) formant un repère orthogonal lié au moyeu (4), ledit repère orthogonal comprenant un premier axe (6), dit axe de pas, un second axe (7), dit axe de battement et un troisième axe (8), dit axe de trainée.

**16.** Procédé selon l'une quelconque des revendications 14 à 15, **caractérisé en ce que** ledit procédé de mesure permet de réaliser entre 5 et 45 images dudit motif à damiers (10) sur un tour de rotor (5).

**Patentansprüche**

**1.** Vorrichtung (1, 101) zur Messung von Winkelstellungen eines Rotorblattelements (2) eines Drehflügelflugzeugs (3, 103), wobei das Rotorblattelement (2) drehbeweglich um mindestens eine Drehachse (6, 7, 8) relativ zu einer Nabe (4) eines Rotors (5) angeordnet ist, **dadurch gekennzeichnet, dass** die Messvorrichtung (1, 101) aufweist:

- mindestens ein Schachbrettmuster (10), das mit dem Rotorblattelement (2) fest verbunden werden kann, wobei das Schachbrettmuster (10) zwei Gruppen von Oberflächen (11, 12) aufweist, die jeweils verschiedene Leuchtdichtefaktoren aufweisen, wobei jede Oberfläche (11) einer ersten Gruppe einen ersten Leuchtdichtefaktor aufweist und neben mindestens einer Oberfläche (12) einer zweiten Gruppe angeordnet ist, die einen zweiten Leuchtdichtefaktor aufweist, wobei der erste Leuchtdichtefaktor größer als der zweite Leuchtdichtefaktor ist,
- mindestens eine Kamera (20), die im Laufe der Zeit eine Mehrzahl von Bildern des Schachbrettmusters (10) aufnehmen kann, wobei die Kamera (20) an der Nabe (4) befestigt werden kann,
- ein Synchronisationsorgan (30), das es erlaubt, jedem von der Kamera (20) aufgenommenen Bild einen Zeitparameter in Abhängigkeit von dem Azimutwinkel des Rotors (5) zuzuordnen,
- einen Speicher (40), der es erlaubt, jedes Bild mit dem zugehörigen Zeitparameter zu speichern,
- einen Rechner (50, 150), der es erlaubt, automatisch die Winkelstellungen des Rotorblattelements (2) bezüglich mindestens einer Drehachse (6, 7, 8) ausgehend von den Bildern des Schachbrettmusters (10) und deren zugehörigen Zeitparametern zu bestimmen.

2. Vorrichtung nach Anspruch 1,
**dadurch gekennzeichnet, dass** der Rechner (50, 150) die Winkelstellungen des Rotorblattelements (2) bezüglich drei Drehachsen (6, 7, 8) bestimmt, die ein mit der Nabe (4) verbundenes orthogonales Bezugssystem bilden, wobei das orthogonale Bezugssystem eine erste Achse (6), genannt Anstellwinkelverstellachse, eine zweite Achse (7), genannt Schlagachse, und eine dritte Achse (8), genannt Widerstandsachse, aufweist.

3. Vorrichtung nach einem der Ansprüche 1 bis 2,
**dadurch gekennzeichnet, dass** das Synchronisationsorgan (30) einen Sensor (31) aufweist, der es erlaubt, jede Drehung des Rotors (5) zu erfassen.

4. Vorrichtung nach einem der Ansprüche 1 bis 3,
**dadurch gekennzeichnet, dass** der Rechner (50, 150) in dem Drehflügelflugzeug (3, 103) angeordnet ist.

5. Vorrichtung nach Anspruch 4,
**dadurch gekennzeichnet, dass** der Rechner (50) mit der Nabe (4) des Rotors (5) in der Nähe der Kamera (20) fest verbunden werden kann.

6. Vorrichtung nach Anspruch 4,
**dadurch gekennzeichnet, dass** der Rechner (150) auf einem bezüglich eines Rumpfes (152) des Drehflügelflugzeugs (103) ortsfesten Teil angeordnet werden kann.

7. Vorrichtung nach einem der Ansprüche 1 bis 6,
**dadurch gekennzeichnet, dass** der Speicher (40) abnehmbar ist und mit einer mit der Kamera (20) fest verbundenen Schnittstelle (21) zusammenwirkt.

8. Vorrichtung nach einem der Ansprüche 1 bis 7,
**dadurch gekennzeichnet, dass** das Schachbrettmuster (10) aufweist:

• mindestens drei Linien (13), die durch eine Alternanz von Oberflächen (11, 12) mit unterschiedlichen Leuchtdichtefaktoren gebildet werden, wobei die Linien (13) parallel zueinander sind und auf dem Rotorblattelement (2) in einer Richtung parallel zu einer Anstellwinkelverstellachse (6) des Rotorblattelements (2) angeordnet sind, und
• mindestens drei Spalten (14), die durch eine Alternanz von Oberflächen (11, 12) mit unterschiedlichen Leuchtdichtefaktoren gebildet werden, wobei die Spalten (14) zueinander parallel sind und auf dem Rotorblattelement (2) in einer Richtung parallel zu einer Schlagachse (7) des Rotorblattelements (2) angeordnet sind.

9. Vorrichtung nach Anspruch 8,
**dadurch gekennzeichnet, dass** das Schachbrettmuster (10) fünf Linien (13) aufweist, die durch eine Alternanz von Oberflächen (11, 12) mit unterschiedlichen Leuchtdichtefaktoren gebildet werden, und neun Spalten (14), die durch eine Alternanz von Oberflächen (11, 12) mit unterschiedlichen Leuchtdichtefaktoren gebildet werden.

10. Vorrichtung nach einem der Ansprüche 1 bis 9,
**dadurch gekennzeichnet, dass** das Schachbrettmuster (10) eine Einfassung (15) aufweist, deren Leuchtdichtefaktor im Wesentlichen gleich dem ersten Leuchtdichtefaktor der ersten Gruppe von Oberflächen (11) ist.

11. Vorrichtung nach einem der Ansprüche 1 bis 10,
**dadurch gekennzeichnet, dass** die Oberflächen (11) der ersten Gruppe und die Oberflächen (12) der zweiten Gruppe quadratisch sind.

12. Vorrichtung nach einem der Ansprüche 1 bis 11,
**dadurch gekennzeichnet, dass** das Schachbrettmuster (10) Oberflächen (12) der zweiten Gruppe in jeder Ecke der durch die beiden Gruppen von Oberflächen (11, 12) definierten Form aufweist.

13. Drehflügelflugzeug (3, 103),

**dadurch gekennzeichnet, dass** es eine Vorrichtung (1, 101) zur Messung von Winkelstellungen eines Rotorblattelements (2) bezüglich einer Nabe (4) eines Rotors (5) nach einem der Ansprüche 1 bis 12 aufweist.

14. Verfahren zur Messung von Winkelstellungen eines Rotorblattelements eines Drehflügelflugzeugs (3, 103) um mindestens eine Drehachse (6, 7, 8) bezüglich einer Nabe (4) eines Rotors (5), **dadurch gekennzeichnet, dass** das Verfahren Schritte aufweist, die darin bestehen, dass:

  - mindestens ein Schachbrettmuster (10) mit dem Rotorblattelement (2) fest verbunden wird, wobei das Schachbrettmuster (10) zwei Gruppen von Oberflächen (11, 12) aufweist, die jeweils unterschiedliche Leuchtdichtefaktoren aufweisen, wobei jede Oberfläche (11) einer ersten Gruppe einen ersten Leuchtdichtefaktor aufweist und neben mindestens einer Oberfläche (12) einer zweiten Gruppe angeordnet ist, die einen zweiten Leuchtdichtefaktor aufweist, wobei der erste Leuchtdichtefaktor größer als der zweite Leuchtdichtefaktor ist,
  - mit der Nabe (4) mindestens eine Kamera (20) fest verbunden wird, die im Laufe der Zeit eine Mehrzahl von Bildern des Schachbrettmusters (10) aufnehmen kann,
  - eine Mehrzahl von Bildern des Schachbrettmusters (10) während einer Drehung des Rotors (5) aufgenommen wird,
  - jedes von der Kamera (20) aufgenommene Bild mit einem Zeitfaktor in Abhängigkeit von einem Azimutwinkel des Rotors (5) synchronisiert wird,
  - jedes Bild mit dem zugehörigen Zeitparameter gespeichert wird,
  - die Winkelstellungen des Rotorblattelements (2) bezüglich mindestens einer Drehachse (6, 7, 8) ausgehend von den Bildern des Schachbrettmusters (10) und deren zugehörigen Zeitparametern automatisch bestimmt werden.

15. Verfahren nach Anspruch 14,
**dadurch gekennzeichnet, dass** das Messverfahren einen Schritt aufweist zur Bestimmung der Winkelstellungen des Rotorblattelements (2) in Richtung dreier Drehachsen (6, 7, 8), die ein orthogonales Bezugssystem bilden, das mit der Nabe (4) verbunden ist, wobei das orthogonale Bezugssystem eine erste Achse (6), genannt Anstellwinkelverstellachse, eine zweite Achse (7), genannt Schlagachse, und eine dritte Achse (8), genannt Widerstandsachse, aufweist.

16. Verfahren nach einem der Ansprüche 14 bis 15,
**dadurch gekennzeichnet, dass** das Messverfahren es erlaubt, zwischen 5 und 45 Bilder des Schachbrettmusters (10) bei einer Umdrehung des Rotors (5) aufzunehmen.

**Claims**

1. Measurement device (1, 101) for measuring the angular positions of a blade element (2) of a rotorcraft (3, 103), said blade element (2) being arranged to be movable in rotation relative to a hub (4) of a rotor (5) about at least one axis of rotation (6, 7, 8), **characterised in that** said measurement device (1, 101) comprises:

  - at least one chequered pattern (10) suitable for being secured to said blade element (2), said chequered pattern (10) comprising two groups of surfaces (11, 12) having respectively different luminance factors, each surface (11) of a first group having a first luminance factor and being juxtaposed with at least one surface (12) of a second group having a second luminance factor, said first luminance factor being greater than said second luminance factor;
  - at least one camera (20) suitable for taking a plurality of images of said the chequered pattern (10) as a function of time, said camera (20) being suitable for being secured to said hub (4);
  - a synchronisation member (30) which makes it possible to allocate to each image taken by said camera (20) a time parameter which is a function of the azimuth angle of said rotor (5);
  - a memory (40) making it possible to store each image with said corresponding time parameter;
  - a computer (50, 150) making it possible to determine automatically said angular positions of the blade element (2) about at least one axis of rotation (6, 7, 8) from said images of the chequered pattern (10) and their corresponding time parameter.

2. Device according to claim 1,
**characterised in that** said computer (50, 150) determines the angular positions of the blade element (2) about three axes of rotation (6, 7, 8) forming an orthogonal reference frame associated with the hub (4), said orthogonal reference frame comprising a first axis (6), referred to as a pitch axis, a second axis (7), referred to as a flapping axis and a third axis (8), referred to as a drag axis.

3. Device according to any one of claims 1 to 2,
**characterised in that** said synchronisation member (30) comprises a sensor (31) making it possible to detect each revolution of said rotor (5).

4. Device according to any one of claims 1 to 3,
**characterised in that** said computer (50, 150) is arranged on said rotorcraft (3, 103).

5. Device according to claim 4,
**characterised in that** said computer (50) is suitable for being secured to the hub (4) of the rotor (5) in the proximity of said camera (20).

6. Device according to claim 4,
**characterised in that** said computer (150) is suitable for being arranged on a portion fixed relative to a fuselage (152) of said rotorcraft (103).

7. Device according to any one of claims 1 to 6,
**characterised in that** said memory (40) is of the removable type and cooperates with an interface (21) secured to said camera (20).

8. Device according to any one of claims 1 to 7,
**characterised in that** said chequered pattern (10) comprises:

   • at least three rows (13) formed by an alternation of surfaces (11, 12) having different luminance factors, said rows (13) being mutually parallel and arranged on said blade element (2) in a direction parallel to a pitch axis (6) of said blade element (2), and,
   • at least three columns (14) formed by an alternation of surfaces (11, 12) having different luminance factors, said columns (14) being mutually parallel and arranged on said blade element (2) in a direction parallel to a flapping axis (7) of said blade element (2).

9. Device according to claim 8,
**characterised in that** said chequered pattern (10) comprises five rows (13) formed by an alternation of surfaces (11, 12) having different luminance factors and nine columns (14) formed by an alternation of surfaces (11, 12) having different luminance factors.

10. Device according to any one of claims 1 to 9,
**characterised in that** said chequered pattern (10) comprises a surround (15), the luminance factor of which is substantially equal to the first luminance factor of said first group of surfaces (11).

11. Device according to any one of claims 1 to 10,
**characterised in that** said surfaces (11) of the first group and said surfaces (12) of the second group are of square shape.

12. Device according to any one of claims 1 to 11,
**characterised in that** said chequered pattern (10) comprises surfaces (12) of the second group in each of the corners of the shape defined by the two groups of surfaces (11, 12).

13. Rotorcraft (3, 103) **characterised in that** it comprises a measurement device (1, 101) for measuring the angular positions of a blade element (2) relative to a hub (4) of a rotor (5) according to any one of claims 1 to 12.

14. Measurement method for measuring the angular positions about at least one axis of rotation (6, 7, 8) of a blade element (2) of a rotorcraft (3, 103) relative to a hub (4) of a rotor (5),
**characterised in that** said method comprises steps consisting in:

   - securing at least one chequered pattern (10) to said blade element (2), said chequered pattern (10) comprising two groups of surfaces (11, 12) having respectively different luminance factors, each surface (11) of a first group having a first luminance factor and being juxtaposed with at least one surface (12) of a second group having a second luminance factor, said first luminance factor being greater than said second luminance factor,
   - securing to said hub (4) at least one camera (20) suitable for taking a plurality of images of said chequered pattern (10) as a function of time,
   - taking a plurality of images of said chequered pattern (10) during a rotation of said rotor (5),
   - synchronising each image taken by the camera (20) with a time parameter which is a function of an azimuth angle of said rotor (5),
   - storing each image with said corresponding time parameter,
   - automatically determining said angular positions of the blade element (2) about at least one axis of rotation (6, 7, 8) from said images of the chequered pattern (10) and their corresponding time parameter.

15. Method according to claim 14,
**characterised in that** said measurement method comprises a step aiming to determine the angular positions of said blade element (2) about three axes of rotation (6, 7, 8) forming an orthogonal reference frame associated with the hub (4), said orthogonal reference frame comprising a first axis (6), referred to as a pitch axis, a second axis (7), referred to as a flapping axis and a third axis (8), referred to as a drag axis.

16. Method according to any one of claims 14 to 15,
**characterised in that** said measurement method makes it possible to take between 5 and 45 images of said chequered pattern (10) over one revolution of the rotor (5).

**Fig.1**

**Fig.2**

**Fig.3**

**Fig.4**

**Fig.5**

**Fig.6**

**Fig.7**

**Fig.8**

**Fig.9**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4604526 A
- GB 1116748 A
- JP 2010149602 B
- US 2014226153 A

**Littérature non-brevet citée dans la description**

- A combined corner and edge detector. **CHRIS HARRIS ; MIKE STEPHENS.** Proceedings of the fourth Alvey Vision Conference. l'université de Manchester, 31 Août 1988